(19) **Europäisches Patentamt**
**European Patent Office**
**Office européen des brevets**

(11) **EP 2 910 860 B1**

(12) **EUROPEAN PATENT SPECIFICATION**

(45) Date of publication and mention
of the grant of the patent:
**24.08.2016 Bulletin 2016/34**

(51) Int Cl.:
*F24D 19/10* *(2006.01)*      *G05D 23/19* *(2006.01)*

(21) Application number: **14000632.1**

(22) Date of filing: **22.02.2014**

(54) **A thermostatic valve system and a method for regulating a thermostatic valve**

Thermostatventilsystem und Verfahren zur Regelung eines Thermostatventils

Système de soupape thermostatique et procédé de régulation d'une soupape thermostatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2015 Bulletin 2015/35**

(73) Proprietor: **IMI Hydronic Engineering International SA**
**1262 Eysins (CH)**

(72) Inventors:
• **Henke, Bernhard**
**59929 Brilon (DE)**

• **Thybo, Claus**
**6300 Sonderborg (DK)**
• **Seitz, Stefan**
**6312 Steinhausen (CH)**

(74) Representative: **Wickord, Wiro**
**Tarvenkorn & Wickord Patentanwälte**
**Partnerschaftsgesellschaft mbB**
**Technologiepark 11**
**33100 Paderborn (DE)**

(56) References cited:
**EP-A1- 0 923 013**      **EP-A1- 1 729 195**
**DE-A1-102011 018 698**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention relates to a method for regulating a thermostatic valve in a heat exchanger containing a primary media in order to obtain a desired secondary media temperature. The present invention also relates to a thermostatic valve system for regulating the thermal transmission from a heat exchanger containing a primary media.

Background art

In the technical field of heat exchangers, such as convectors or radiators, there are different solutions to controlling the temperature. Commonly used solutions are the thermostatic expansion valve. Such valves are usually provided with some type of user control, such as a knob or a dial, on which the user sets a desired temperature (the numbers on a dial may represent actual temperatures or relative temperature, for instance numbers 0-6 where 0 is the lowest and 6 is the highest temperature). By turning the dial, a thermostatic element in the valve and a valve stem connected to the thermostatic element are displaced, whereby the flow through the valve is changed, which in turn will change the temperature emitted by the heat exchanger. A portion of the thermostatic element becomes longer when its temperature increases and shorter when its temperature decreases. Thus, if the temperature later deviates from the set temperature, for instance if a window is opened letting in cooler air, the length of said portion of the thermostatic element will change. In the mentioned case of cooler air entering, said portion becomes shorter and thereby retracts the valve stem somewhat, which in turn results in increased flow through the valve and thus, more heat is emitted from the heat exchanger.

Thermostatic expansion valves have a drawback in that the thermostatic elements have tolerances and there may be production deviations from one element to another. Thus, the accuracy of a thermostatic expansion valve may be lower then what would be desirable.

A more modern solution is the electronic thermostatic regulating valve (eTRV). Such valves are battery driven and when the temperature is to be changed the electronics actuate a motor to change the opening of the valve. As temperatures fluctuations may occur frequently at different facilities, e.g. due to time of the day, opening/closing of windows, change in number of people in a room or number of machines emitting heat etc., the temperature controlling may be more or less continuous. When the power of the battery has been consumed, the battery has to be replaced. In a large building with many heat exchangers having eTRV's, such battery replacement may be quite time consuming. Such a regulating valve is shown in EP 0 923 013 A1.

Summary of the invention

An object of the inventive concept is to aleviate the drawbacks of the prior art. This and other objects, which will become apparent in the following, are accomplished by a method and a valve system as defined in the accompanying independent claims.

The present inventive concept is based on the realization that a thermostatic element may be used in a valve for regulating the temperature, and any long term deviation between a desired temperature and an actual temperature, for instance due to tolerances, can be compensated for by adjusting the position of the thermostatic element or by changing the distance between the thermostatic element and the valve closing member. In other words, if the temperature is continuously deviating by, for instance, 0.5 °C, then the position of the thermostatic element can be changed accordingly to open the valve to such extent that the temperature deviation is compensated for. Furthermore, if the deviation is temperature dependent, for instance deviating more at high actual temperatures than low actual temperatures, then the extent of compensation is adjusted to the present conditions, i.e. in this example when compensating for the deviation, the position of the thermostatic element is moved more at high temperatures than when compensating at lower temperatures. Another possibility would be to change the length of connection between the valve closing member and the thermostatic element. In the above example, the valve closing member would be distanced from the thermostatic element more at high temperatures than at low temperatures.

Thus, according to a first aspect of the inventive concept, a method of regulating a thermostatic valve in a heat exchanger containing a primary media in order to obtain a desired secondary media temperature, wherein the thermostatic valve comprises a valve closing member connected to a thermostatic element in thermal contact with a secondary media, the length of a portion of the thermostatic element being a function of the temperature of the thermostatic element and thereby indirectly of the secondary media temperature, the method comprising the steps of:

- obtaining a desired value for the secondary media temperature,
- translating said desired value into a corresponding position of the thermostatic element based on said function,

- moving the thermostatic element and the connected valve closing member and/or changing the distance between the thermostatic element and the connected valve closing member based on said corresponding position, such that the position of the valve closing member is adjusted and the desired secondary media temperature is approached,
- acquiring measured values of the secondary media temperature,
- compensating the position of the valve closing member based on the past deviation ($\Delta T$) between the desired temperature value and measured temperature values in order to reduce future temperature deviation.

Since a portion, such as a bellows, of the thermostatic element is constantly adapting its length to temperature changes, the positional compensation needs not be done on a short term, but can be done on a long term. The thermostatic element is constantly/continuously rejecting and accommodating for fluctuations in temperature. As such, the compensation does not have to be performed frequently. The compensation may, for instance, be achieved by means of an electronically controlled motor for positioning the thermostatic element, or for achieving a relative motion between the valve closing member and the thermostatic element. Such a motor may be powered by a low energy consumption source, such as a Seebeck generator, a photo voltaic generator or even a small battery. Since the compensation can be done on a long term basis, the energy/power consumption for driving the motor will be very low, compared to the eTRV's which more or less continuously operate the motor.

In the present inventive concept, even if a battery is used to power a motor, there will not be consumed much power, since the normal regulation is handled by the thermostatic element, but the long term regulation is controlled by the motor for a very short period when making the adjustment, and infrequently (for instance, after one or more days/weeks).

It should be understood that the inventive concept not only compensates for manufacturing tolerances, but can also compensate for inherent disturbances in the fluid distribution system.

In this disclosure, the primary media inside the heat exchanger may be for heating or cooling. The heat exchanger may be for heating and/or cooling. It may be in the form of a convector or a radiator etc. The heat exchanger could be located in a facilities, such as a room for heating/cooling the room, other possibilities being a heat exchanger which is included in a manufacturing process, such as a chemical process. The primary media may be a fluid, such as water or a water/glycol mixture. The secondary media may be a fluid, such as ambient air or a fluid, such as water or a water/glycol mixture.

The step of obtaining a desired value for the secondary media temperature may be implemented in various ways. For instance, it can be in the form of input data from another system which is transferred to a control unit in the present system, the control unit being operatively connected, e.g. via a motor, to the thermostatic element and/or the valve closing member. Such another system could be a Building Management System (BMS) or a mobile phone etc. In the case of a BMS the desired value could be automatically generated by means of a computer of the BMS. The desired value could be obtained from a user interface, such as from an electronic interface, e.g. a control panel, or from a mechanical interface, such as a dial or wheel. Thus, according to at least one exemplary embodiment, the step of obtaining a desired temperature value for the secondary media temperature is achieved by entering the desired temperature on a user interface.

The step of aquiring measured values of the secondary media temperature may be done directly. It may for instance be done by means of a temperature sensor, which may be located near the thermostatic element or at some different place. For instance, if the thermostatic valve is located in one part of a room but it is in another part of the room where you want to have a desired temperature, then the sensor could be placed in that other part of the room.

According to at least one exemplary embodiment, the the past temperature deviation $\Delta T$ is calculated according to at least one of the following formulas:

$$\Delta T = \frac{1}{N}\left(\Sigma\, T_{set} - \Sigma\, T_{act}\right)$$

or

$$\Delta T = \frac{1}{N}\, \Sigma\left(T_{set} - T_{act}\right)$$

or

$$\Delta T = C_{x+1} = \frac{1}{N}(Tset - Tact) + C_x$$

wherein $\Delta T$ is the past temperature deviation, $T_{set}$ is the desired temperature, Tact is the measured temperature, N is the number of acquired measured values that have been compared with at least one desired temperature and $C_{x+1}$ is a recursive deviation value.

According to at least one exemplary embodiment, the step of compensating the position of the valve closing member includes the steps of translating the temperature deviation into a corrective distance in a direction, and moving the thermostatic element said corrective distance in said direction.

According to at least one exemplary emodiment, the step of compensating the position of the valve closing member includes the steps of translating the temperature deviation into a corrective distance in a direction, and changing the distance between the thermostatic element and the valve closing member for compensation of the position.

The above exemplified compensations of the position of the valve closing member may take into account the sum of errors. This errors may include tolerances, built-in disturbances, variations of temperature between location of temperature sensor and the thermostatic element, etc.

Since heat may "leak" from the primary media, e.g. fluid such as heating water, to the thermostatic element, the temperature experienced by the thermostatic element can be the sum of the secondary media temperature (e.g. 20 °C sensed by a temperature sensor in the room) and the heat transfer (e.g. 0.5 °C if the fluid is 40 °C or 3 °C if fluid is 70 °C). Any extra deviation between the desired value and the measured value caused by such heat transfer will automatically be compensated for by the method of the present inventive concept.

A motor could be adapted to move the thermostatic element, suitably controlled by a control unit. Such a motor could also or alternatively be adapted to move the valve closing member or a linking member between the thermostatic element and the valve closing member.

According to at least one exemplary embodiment, the corrective distance is determined by continuously and over time measuring the temperature deviation ($\Delta T$) as a function of iterative corrective displacements to the thermostatic element. The system may be self-learning and store values in a table. For instance, different degrees of temperature deviation will require different corrective positioning of the valve closing member. Such a table may have a linear relationship between that temperature deviation and the corrective distance to be made for the valve closing member, but it could also be non-linear. It may be the case that the temperature deviation is constant or substantially constant, irrespective of the desired secondary media temperature. In such case, it may be enough to once make the correction, i.e. moving the valve closing member said corrective distance. However, in other cases the temperature deviation may vary depending on the desired or measured secondary media temperature. In such case, the corrective positioning of the valve closing member may have to be changed when a new desired temperature value is obtained. The corrective distance or corrective distances may suitably be stored in a compensating table, e.g. in an electronic memory of a control unit.

Thus, according to at least one exemplary embodiment, the corrective distance is stored in a compensating table based on a previously determined relationship between ($\Delta T$) and the corrective displacement.

According to at least one exemplary embodiment, the compensating table is updated over time.

According to at least one exemplary embodiment, over time new values for the desired secondary media temperature are obtainable, and wherein each one of a number of ranges of desired secondary media temperature has an individual positional compensation for moving the valve closing member an individually defined distance. Thus, for a first temperature range (for instance 18.0-19.9°C) one compensation table may be used, where different temperature deviations $\Delta T$ are assigned with different corrective distances, while for a second temperature range (for instance 20.0-21.9°C) another compensation table may be used, with different relationships between the temperature deviations $\Delta T$ and corrective distances. Said first and second temperature range may be based on the desired secondary media temperature or the measured secondary media temperature.

Although in some embodiments, different compensation tables may be used for different temperature ranges, in other embodiments the positional compensation is independent of changed values for the desired secondary media temperature.

As already explained in this disclosure, the thermostatic element may be operatively connected to a motor. The motor may be driven by a control unit. This is reflected in at least one exemplary embodiment, according to which the thermostatic valve is connected to or comprises a drive system, including a drive control unit and a drive motor operatively connected to the thermostatic element, wherein the step of compensating the position of the valve closing member is achieved by:

- receiving said corrective distance in the drive control unit,

- translating said distance into a movement required by the drive motor, and
- activating the drive motor to move the thermostatic element said corrective distance in said direction.

According to at least one exemplary embodiment, the thermostatic valve is connected to or comprises a drive system, including a drive control unit and a drive motor operatively connected to the valve closing member or a to a linking member between the valve closing member and the thermostatic element, wherein the step of compensating the position of the valve closing member is achieved by:

- receiving said corrective distance in the drive control unit,
- translating said distance into a movement required by the drive motor, and
- activating the drive motor to move the valve closing member or said linking member said corrective distance in said direction.

The above drive motor and/or other components such as the drive control unit, may be powered in different ways, e.g. by means of a battery, photo voltaic generator, a Seebeck element, and/or other appropriate power supply. According to at least one exemplary embodiment, the method further comprises the step of supplying energy to the drive system by means of a Seebeck element placed with a first side in thermal contact with the secondary media and a second side in thermal contact with the primary media. A "Seebeck element" is also known as a thermoelectric element. It generates a voltage when there is different temperature on each side.

According to a second aspect of the inventive concept, there is provided a thermostatic valve system for regulating the thermal transmission from a heat exchanger containing a primary media, the valve system comprises:

a valve closing member connected to a valve, such that a displacement distance of the valve closing member determines the degree of opening of said valve, and
a thermostatic element connected to the valve closing member, such that a thermal expansion/shrinkage of a portion of the thermostatic element transmits a movement to the valve closing member,
means for obtaining a desired value for a desired secondary media temperature,
means for obtaining measured values of the secondary media temperature,
a control unit adapted to acquire said measured values of the secondary media temperature and to compensate the position of the valve closing member based on the past deviation between the desired value and measured values in order to reduce future deviation.

The features present in connection with the first aspect and its various embodiment may also be implemented in the thermostatic valve system of the second aspect, and vice versa.

The control unit adapted to acquire said measured values could be a wall mounted unit, such as a control panel, computer, etc. It could include a temperature sensor or it could receive temperature signals from an external temperature sensor. The control unit could communicate, i.e. send and/or receive information, via wires or wireless, e.g. RF, Bluetooth, etc. Thus, the control unit could be located remotely from a motor which could be used to regulate the position of the valve closing member. In other embodiments, the control unit could be included in the same housing as said motor. Thus, the calculation or determination of how much compensation of the position of the valve closing member is appropriate, may be performed locally at the thermostatic valve or remotely.

According to at least one exemplary embodiment, the thermostatic valve system further comprises:

a drive system, connected to or including said control unit and a drive motor operatively connected to the thermostatic element and adapted to change the position of the thermostatic element and/or the distance between the thermostatic element and the valve closing member,
wherein said control unit is adapted to translate the temperature deviation into a corrective distance in a direction and to control the drive motor to move the thermostatic element, said valve closing member and/or a linking member connecting said valve closing member to said thermostatic element said corrective distance in said direction.

According to at least one example embodiment, the drive motor is an electrically driven motor. In other embodiments, instead of an electrical driven motor, the movement may be caused by a mechanical, it may be a magnetic, pneumatic, hydraulic or other type of actuation device which can be operatively connected to the thermostatic element, to the valve closing member and/or to a linking member connecting the valve closing member to the thermostatic elements.

According to at least one exemplary embodiment, a Seebeck element is adapted to supply energy to the drive system, and wherein the Seebeck element is placed with a first side in thermal contact with the secondary media and a second side in thermal contact with the primary media.

According to at least one exemplary embodiment, the Seebeck element and the thermostatic element are placed in two separate compartments inside a housing for the thermostatic valve, the two compartments being thermally insulated from each other. The Seebeck element benefits from the proximity to the temperature of the primary media, e.g. heating water, while temperature transfer from the primary media to the thermostatic element in the secondary media is avoided or reduced.

According to at least one exemplary embodiment, the thermostatic valve system comprise a user interface for entering the desired value for the secondary media temperature, wherein said user interface is:

mounted on the thermostatic valve, or
arranged in a remote position in relation to the thermostatic valve, such as in connection to a control device of a Building Management System (BMS), a dedicated control panel, or arranged as a wireless communication device, such as a cell phone, computer or a remote control.

The desired value or preset value of the secondary media temperature may change over time. For instance, in a residential building, one day a user may wish to set 20 °C in the room, but if the user is away for a few days he/she may wish to decrease the temperature to 18 °C. The system may for the different settings detect the temperature deviations between the set/desired and the measured values of the temperature and compensate the position of the valve closing member based on the past deviation between the desired values and the respective measured values in order to reduce future deviation. The measured values may, for instance, be acquired from a temperature sensor. According to at least one exemplary embodiment, a temperature sensor is located in/on the thermostatic valve. According to at least one exemplary embodiment the temperature sensor is located in the user interface.

Brief description of the drawings

Fig. 1 is a cross-sectional view, schematically illustrating a thermostatic valve system in accordance with at least one exemplary embodiment of the inventive concept.
Fig. 2 is an end view, schematically illustrating at least a further exemplary embodiment.
Fig. 3 is a graph illustrating a difference between a desired value for the secondary media temperature and a measured value of the secondary media temperature.
Fig. 4 schematically illustrates wireless communication for compensating for temperature deviations.
Figs. 5a and 5b illustrate a linking member for changing the distance between a valve closing member and a thermostatic element, in accordance with at least one exemplary embodiment of the inventive concept.
Fig. 6 is a graph illustrating the length of a portion of a thermostatic element as a function of the temperature of the thermostatic element.
Figs. 7a and 7b is a schematic illustration of the use of a compensating table according to at least one exemplary embodiment.

Detailed Description

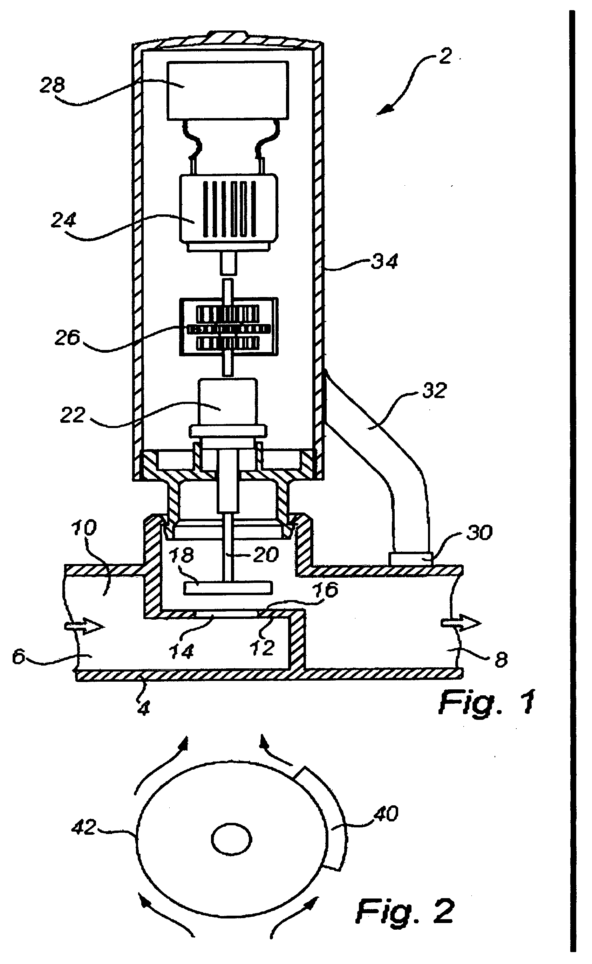

Fig. 1 is a cross-sectional view, schematically illustrating a thermostatic valve system 2 in accordance with at least one exemplary embodiment of the inventive concept. It should be noted that Fig. 1 is a general schematic representation of a valve system 2 and is merely intended to show an underlying principle of the inventive concept. However, this principle could be used on various types of valve closing members, actuating device etc.

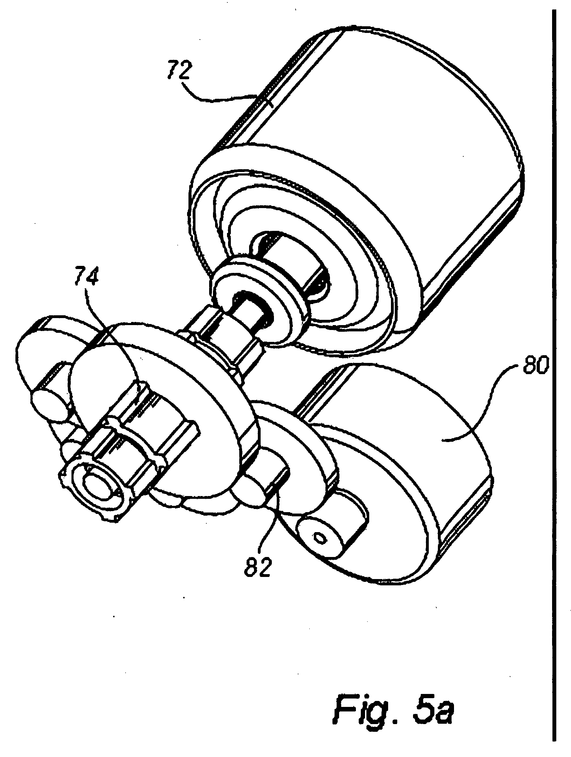

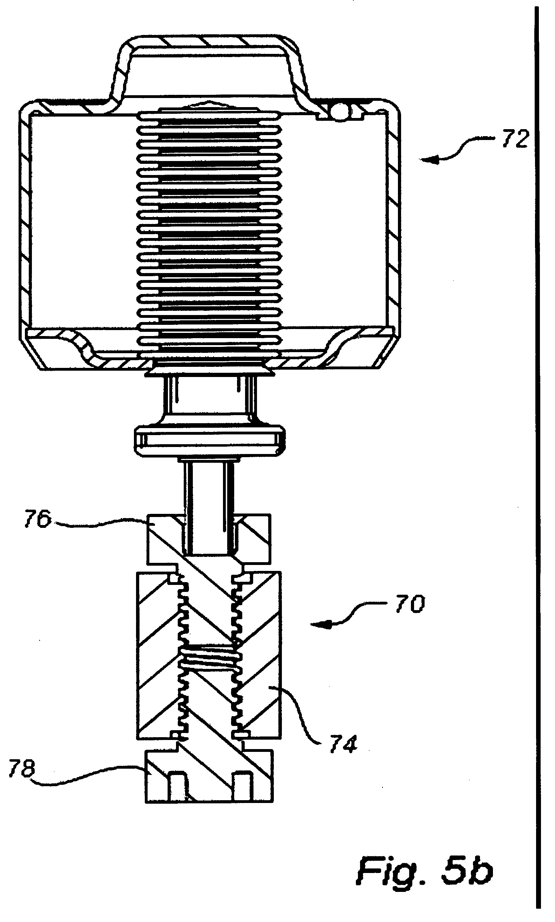

The valve system 2 comprises a valve body 4 which has a fluid inlet 6 and a fluid outlet 8, and a passage 10 between the inlet 6 and the outlet 8. In this embodiment, the valve body 4 comprises a partition wall 12 provided with a through-hole 14. An area around the through-hole 14 forms a valve seat 16. A valve closing member 18, in this embodiment illustrated as a plate (but could be any other suitable type of plug, cone etc.) carried by a valve stem 20, is adjustable in relation to the valve seat 16. The valve closing member 18 is connected to a thermostatic element 22 via the valve stem 20. However, alternatively, it could be connected via linking members, e.g. such as the one illustrated in Figs. 5a and 5b, which linking member may allow a relative displacement between the valve closing member and the thermostatic element. This will be further discussed in connection with Figs. 5a and 5b.

Continuing with Fig. 1, an actuation device 24 is provided for changing the position of the valve closing member 18. The actuation device 24 is herein illustrated as a motor, such as an electrically driven motor. A gear mechanism 26 converts the rotational motion of the motor 24 to a linear motion of the thermostatic element 22, which in turn displaces the valve closing member 18 in a linear motion. A control unit 28 is provided. It may comprise an electronic memory or a database having compensation tables, and may be adapted to receive information about the measured temperature, such as from a separate temperature sensor (not shown), and to receive information about a desired temperature of a secondary media such as ambient air. The control unit 28 will control the actuation device 24 to change the position of the valve closing member 18 based on the past deviation ($\Delta$T) between the desired temperature value and measured temperature values in order to reduce future temperature deviation. The control unit 28 could be programmed to regularly or in certain time frames compensate, e.g. once a week, the temperature deviation that has been measured since the previous compensation. It is also conceivable to make the compensation on demand, at any given time, wherein the control unit 28 makes its compensation based on the measurements available and their deviations from the desired temperature. Suitably, the control unit 28 has or builds up a database or tables with different correlations and correctional distances of the valve closing member 18 for different conditions, such as different temperature deviations or different desired temperature ranges. Based on the database or tables the control unit 28 may, thus, for a given condition make the associated compensation by controlling the actuation device 24 to move the thermostatic element 22 or otherwise change the position of the valve closing member 18. It should be understood that the compensation provided by the control unit 28, is a long term compensation and thus not done frequently. In contrast, the thermostatic element 22 is constantly adapting to changed conditions as a portion thereof automatically expands or shrinks at increased and decreased temperatures, respectively.

The control unit 28 and/or the actuation device 24 is in this example powered by a Seebeck element 30, which is herein illustrated as being attached to an arm 32 extending from a housing 34, however, other ways of mounting the Seebeck element 30 are conceivable, of course. In this example, the housing 34 encloses the control unit 28, the actuation device 24, the gear mechanism 26 and the thermostatic element 22. The Seebeck element 30 has one side on the valve body 4 which houses the primary media, e.g. heating water, while the other side is in the secondary media, e.g. ambient air. The temperature difference between the two sides of the Seebeck element 30 creates a voltage which is enough to power the control unit 28 and the actuation device 24, when needed. Furthermore, an accumulator/capacitor (not shown) may be provided for storing excess energy from the Seebeck element 30.

Fig. 2 is an end view, schematically illustrating at least a further exemplary embodiment. In this exemplary embodiment a Seebeck element 40 has been illustrated as provided on a housing 42 for the thermostatic element and the other components. This schematic drawing is intended to illustrated that the Seebeck element 40 may suitably be arranged at an upper half of the housing 42, where it can be subject to a chimney effect so that secondary media (e.g. air) flows upwards past the Seebeck element 40.

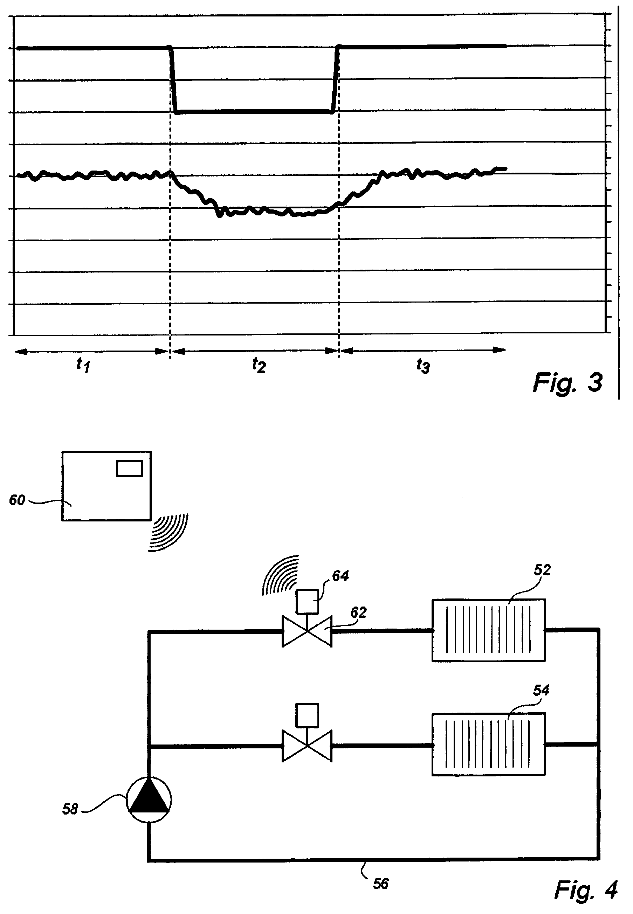

Fig. 3 is a graph illustrating a difference between a desired value for the secondary media temperature and a measured value of the secondary media temperature. The upper line represents a desired value of the secondary media temperature, while the lower line represents the measured values of the secondary media temperature. As can be seen the measured values fluctuate somewhat, which can depend on various factors, such as disturbances in the fluid distribution system, load changes, opening/closing of doors/windows, presence or absence of people, machines emitting heat etc. During a first time period $t_1$, it can be seen that the measured temperature deviated from the desired temperature by approximately four units (a unit is the distance between two horizontal grid lines in the drawing, wherein a unit could represent en integral number of °C or a certain fraction of one or more °C). According to the inventive method the thermostatic element is moved, or the distance between the valve closing member and the thermostatic element is changed, so that the valve closing member obtains a new position wherein the desired temperature is approached. In this example the temperature should be increased four units, i.e. the valve closing member should open the flow passage more to let through more heating fluid, or restrict the flow passage more to let through less cooling fluid. A compensating table may be used to determine how much the thermostatic element and/or the valve closing member should be moved for the present deviation.

However, assuming that no compensation was made during this first time period $t_1$, and that during a second time period $t_2$, the desired value for the secondary media temperature is lower, there will still be a distinct temperature deviation. The measured values have also become lower, however, the deviation is now approximately three units. Thus, the deviation is smaller at this desired temperature than at the higher desired temperature in the first time period $t_1$. Thus, if the system would compensate at this stage the movement of the thermostatic element and/or the valve closing member would be shorter then if the system would compensate during the first time period $t_1$.

Fig. 3 also illustrates that if no compensation has been done during the second time period $t_2$, and the desired temperature is increased, the previous deviation of four units will again be present during a third time period $t_3$. However, if compensations would be done during each one of said three time periods $t_1$, $t_2$, $t_3$, then the deviation would be likely to decrease for each time period.

It should be understood that the compensation could be based on long term measurements, for instance including time periods with different desired temperatures, such as the three time periods in Fig. 3. The compensational and positional change of the valve closing member may then be based on an average deviation of the measured values compared to the desired values of the secondary media temperature. It should be understood that rather than making compensations based on an average deviation, the compensation may be made recursively, taking the present deviation and a previous compensation into account.

Fig. 4 schematically illustrates wireless communication for compensating for temperature deviations, according to at least one exemplary embodiment. In this highly schematic drawing, two consumption points 52, 54, such as radiators, are illustrated. A fluid distribution system 56 includes a pump 58 for providing fluid to the consumption points 52, 54. A remotely located control unit 60 may acquire information about the desired value and actually measured values of the secondary media temperature. Based on the deviations between these values and based on a table which has either been installed at set-up or which has been built-up over time through an iterative learning process by the control unit, the control unit 60 will send a signal to the relevant thermostatic valve system 62 which regulates the consumption point 52 whose temperature needs to be adjusted. A receiving unit 64 will convert the signal into a compensating change of position of the valve closing member, so that the desired secondary temperature is approached.

Figs. 5a and 5b illustrate a linking member 70 for changing the distance between a valve closing member (not shown) and a thermostatic element 72, in accordance with at least one exemplary embodiment of the inventive concept. As explained in connection with Fig. 1, one way to change the position of the valve closing member may be to use an actuation device which moves the thermostatic element, or a portion thereof. Another possibility is illustrated in Figs. 5a and 5b. The thermostatic element 72 could be fixed and connected via a linking member 70 to the valve closing member (not shown), or a stem of the valve closing member. In this example, although others are also conceivable, the linking member 70 is illustrated as an internally threaded sleeve 74 in which two oppositely inserted connecting screws 76, 78 have been inserted. This is best seen in the cross-sectional view of Fig. 5b. As can be seen in Fig. 5a, a motor 80 with appropriate gearing 82 (not shown in Fig. 5b) is operatively connected to the sleeve 74. By keeping the thermostatic element 72 stationary, e.g. affixed to a housing (not shown) and allowing the motor 80 to turn the sleeve 74, this will cause the sleeve 74 to move relative to the screw 76 connected to the thermostatic element 72, while bringing along the other screw 78 connected to the valve closing member in the movement of the sleeve 74. Thus, in this manner the position/distance of the valve closing member relative to the thermostatic element 72 may be changed. The motor 80 may be controlled by a control unit according to any one of the above exemplified or other embodiments, thereby enabling compensation for temperature deviations between a desired secondary media temperature and a measured temperature.

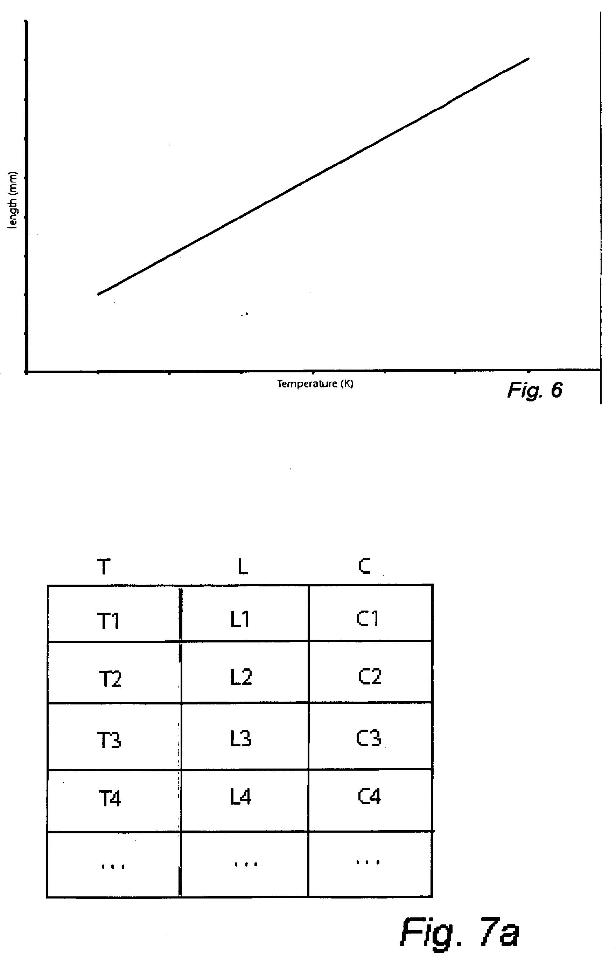

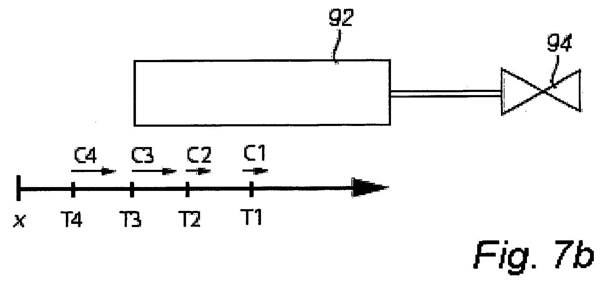

Fig. 6 is a graph illustrating the length of a portion of a thermostatic element as a function of the temperature of the thermostatic element. As shown in the graph, the relationship is linear. Since the portion of the thermostatic element will have different lengths at different temperatures, the temperature in the secondary media (for instance, room temperature) may deviate from a desired temperature. According to the inventive concept this may be compensated for. An example thereof is conceptually illustrated in Figs. 7a and 7b.

Figs. 7a and 7b is a schematic illustration of the use of a compensating table according to at least one exemplary embodiment. As previously explained in connection with Fig. 3, the corrective distance for compensating for the temperature deviation may be determined. This is suitably done by continuously and over time measuring the temperature deviation as a function of iterative corrective displacements to the thermostatic element. The system may be self-learning and store values in a table. Such a table is exemplified in Fig. 7a, according to which at different temperatures T1, T2, T3, T4, etc. the length of the portion of the thermostatic element is L1, L2, L3, L4, etc. This relationship is usually known when the thermostatic element is delivered. Over time, as the temperature deviations are measured for different temperatures, an associated corrective distance C1, C2, C3, C4, etc. may be stored in the table. These values may be updated and fine-tuned over time as more measurement data is captured or if some external conditions or changes in the system occur. The corrective distances C1, C2, C3, C4, may be different from each other, however, one or more of them may be the same, depending on the measured temperature deviations. Thus, the table may have a linear relationship between that temperature deviation and the corrective distance to be made for the valve closing member, but it could also be non-linear. The compensating table may suitably be stored in, for instance, an electronic memory of a control unit, such as the control units described above.

Fig. 7b illustrates schematically how the compensating table may be used. A thermostatic element portion 92 is illustrated as being operatively connected to a valve closing member 94. The thermostatic portion 92 would have a nominal position X at different temperatures T1, T2, T3, T4, etc. For the different temperatures T1, T2, T3, T4, a corrective displacement C1, C2, C3, C4, respectively, of the thermostatic element portion 92 and the valve closing member 94 is made to compensate the current position of the valve closing member 94. In Fig. 7b, the arrows at C3 and C4 are bigger than at C1 and C2, illustrating that in this exemplified compensation table, a larger corrective displacement is needed for measured temperatures T3 and T4 than for T1 and T2.

**Claims**

1. A method of regulating a thermostatic valve (2) in a heat exchanger containing a primary media in order to obtain a desired secondary media temperature wherein the thermostatic valve comprises a valve closing member (18) connected to a thermostatic element (22, 72) in thermal contact with a secondary media, the length of a portion of the thermostatic element being a function of the temperature of the thermostatic element and thereby indirectly of the secondary media temperature, the method comprising the steps of:

- obtaining a desired value for the secondary media temperature,
- translating said desired value into a corresponding position of the thermostatic element based on said function,
- moving the thermostatic element (22, 72) and the connected valve closing member (18) and/or changing the distance between the thermostatic element (22, 72) and the connected valve closing member (18) based on said corresponding position, such that the position of the valve closing member is adjusted and the desired secondary media temperature is approached,
- acquiring measured values of the secondary media temperature, **characterised in that** the method further comprises the steps of
- compensating the position of the valve closing member (18) based on the past deviation ($\Delta T$) between the desired temperature value and measured temperature values in order to reduce future temperature deviation.

2. The method according to claim 1, wherein the past temperature deviation $\Delta T$ is calculated according to at least one of the following formulas:

$$\Delta T = \frac{1}{N}(\Sigma\, Tset - \Sigma\, Tact)$$

or

$$\Delta T = \frac{1}{N}\, \Sigma\, (Tset - Tact)$$

or

$$\Delta T = C_{x+1} = \frac{1}{N}(Tset - Tact) + C_x$$

wherein $\Delta T$ is the past temperature deviation, $T_{set}$ is the desired temperature, Tact is the measured temperature, N is the number of acquired measured values that have been compared with at least one desired temperature and $C_{x+1}$ is a recursive deviation value.

3. The method according to any one of the preceding claims, wherein the step of compensating the position of the valve closing member (18) includes the steps of:

translating the temperature deviation into a corrective distance in a direction, and
moving the thermostatic element said corrective distance in said direction or changing the distance between the thermostatic element (22, 72) and the valve closing member (18) for compensation of the position.

4. The method according to claim 3, wherein the corrective distance is determined by continuously and over time measuring the temperature deviation ($\Delta T$) as a function of iterative corrective displacements to the thermostatic element (22, 72).

5. The method according to claim 4, wherein the corrective distance is stored in a compensating table based on a previously determined relationship between ($\Delta T$) and the corrective displacement.

6. The method according to claim 5, wherein the compensating table is updated over time.

7. The method according to any one of the preceding claims, wherein over time new values for the desired secondary media temperature are obtainable, and wherein each one of a number of ranges of desired secondary media temperature has an individual positional compensation for moving the valve closing member an individually defined distance.

8. The method according to any one of the preceding claims, wherein the positional compensation is independent of changed values for the desired secondary media temperature.

9. The method according to any one of the preceding claims, wherein the step of obtaining a desired temperature value for the secondary media temperature is achieved by entering the desired temperature on a user interface.

10. The method according to any one of the preceding claims, wherein the thermostatic valve (2) is connected to or comprises a drive system, including a drive control unit (28) and a drive motor (21, 20) operatively connected to the thermostatic element (22, 72), wherein the step of compensating the position of the valve closing member is achieved by:

   - receiving said corrective distance in the drive control unit,
   - translating said distance into a movement required by the drive motor, and
   - activating the drive motor to move the thermostatic element said corrective distance in said direction.

11. The method according to claim 10, further comprising the step of supplying energy to the drive system by means of a Seebeck (30) element placed with a first side in thermal contact with the secondary media and a second side in thermal contact with the primary media.

12. A thermostatic valve system for regulating the thermal transmission from a heat exchanger containing a primary media, the valve system comprises:

   a valve closing member (18) connected to a valve, such that a displacement distance of the valve closing member (18) determines the degree of opening of said valve, and
   a thermostatic element (22, 72) connected to the valve closing member, such that a thermal expansion/shrinkage of a portion of the thermostatic element (22, 72) transmits a movement to the valve closing member (18),
   means for obtaining a desired value for a desired secondary media temperature,
   means for obtaining measured values of the secondary media temperature, **characterised in that** it further comprises
   a control unit (28) adapted to acquire said measured values of the secondary media temperature and to compensate the position of the valve closing member (18) based on the past deviation between the desired value and measured values in order to reduce future deviation.

13. The thermostatic valve system according to claim 12, further comprising:

   a drive system, connected to or including said control unit (28) and a drive motor (24, 80) operatively connected to the thermostatic element (22, 72) and adapted to change the position of the thermostatic element (22, 72) and/or the distance between the thermostatic element (22, 72) and the valve closing member (18)
   wherein said control unit (18) is adapted to translate the temperature deviation, into a corrective distance in a direction and to control the drive motor (24, 80) to move the thermostatic element (22, 72), said valve closing member (18) and/or a linking member (70) connecting said valve closing member (18) to said thermostatic element (22, 72) said corrective distance in said direction.

14. The thermostatic valve system according to claim 13, wherein the drive motor (24, 80) is an electrically driven motor.

15. The thermostatic valve system according to any one of claims 13-14, wherein a Seebeck element (30) is adapted to supply energy to the drive system, and wherein the Seebeck element (30) is placed with a first side in thermal contact with the secondary media and a second side in thermal contact with the primary media.

16. The thermostatic valve system according to claim 15, wherein the Seebeck element (30) and the thermostatic element (22, 70) are placed in two separate compartments inside a housing (34) for the thermostatic valve, the two compartments being thermally insulated from each other.

17. The thermostatic valve system according to any one of claims 12-16, comprising a user interface for entering the desired value for the secondary media temperature, wherein said user interface is:

   mounted on the thermostatic valve (2), or
   arranged in a remote position in relation to the thermostatic valve, such as in connection to a control device of a Building Management System (BMS), a dedicated control panel, or arranged as a wireless communication device, such as a cell phone, computer or a remote control.

**18.** The thermostatic valve system (2) according to any one of claims 12-17, wherein a temperature sensor is located in/on the thermostat or in the user interface.

**Patentansprüche**

**1.** Verfahren zum Regeln eines Thermostatventils (2) in einem Wärmetauscher, der ein Primärmedium enthält, um eine gewünschte Sekundärmediumtemperatur zu erhalten, wobei das Thermostatventil ein Ventilschließelement (18) umfasst, das mit einem Thermostatelement (22, 72) verbunden ist, das in thermischem Kontakt mit einem Sekundärmedium steht, wobei die Länge eines Abschnitts des Thermostatelements eine Funktion der Temperatur des Thermostatelements und dadurch indirekt der Sekundärmediumtemperatur ist, wobei das Verfahren folgende Schritte umfasst:

- Erhalten eines gewünschten Wertes für die Sekundärmediumtemperatur,
- Übersetzen dieses gewünschten Wertes in eine entsprechende Position des Thermostatelements auf der Basis der Funktion,
- Bewegen des Thermostatelements (22, 72) und des verbundenen Ventilschließelements (18) und/oder Ändern der Distanz zwischen dem Thermostatelement (22, 72) und dem verbundenen Ventilschließelement (18) auf der Basis der entsprechenden Position, dergestalt, dass die Position des Ventilschließelements eingestellt wird und die gewünschte Sekundärmediumtemperatur angenähert wird,
- Erfassen gemessener Werte der Sekundärmediumtemperatur, **dadurch gekennzeichnet, dass** das Verfahren des Weiteren folgende Schritte umfasst:
- Kompensieren der Position des Ventilschließelements (18) auf der Basis der früheren Abweichung (ΔT) zwischen dem gewünschten Temperaturwert und gemessenen Temperaturwerten, um eine künftige Temperaturabweichung zu reduzieren.

**2.** Verfahren nach Anspruch 1, wobei die frühere Temperaturabweichung ΔT gemäß mindestens einer der folgenden Formeln berechnet wird:

$$\Delta T = \frac{1}{N}(\Sigma\, Tset - \Sigma\, Tact)$$

oder

$$\Delta T = \frac{1}{N}\,\Sigma\,(Tset - Tact)$$

oder

$$\Delta T = C_{x+1} = \frac{1}{N}(Tset - Tact) + C_x$$

wobei ΔT die frühere Temperaturabweichung ist, $T_{set}$ die gewünschte Temperatur ist, $T_{act}$ die gemessene Temperatur ist, N die Anzahl der erhaltenen gemessenen Werte ist, die mit mindestens einer gewünschten Temperatur verglichen wurden, und $C_{x+1}$ ein rekursiver Abweichungswert ist.

**3.** Verfahren nach einem der vorangehenden Ansprüche, wobei der Schritt des Kompensierens der Position des Ventilschließelements (18) folgende Schritte umfasst:

Übersetzen der Temperaturabweichung in eine Korrekturdistanz in einer Richtung, und
Bewegen des Thermostatelements um die Korrekturdistanz in der Richtung oder Ändern der Distanz zwischen dem Thermostatelement (22, 72) und dem Ventilschließelement (18) zum Kompensieren der Position.

**4.** Verfahren nach Anspruch 3, wobei die Korrekturdistanz durch kontinuierliche Zeitverlaufsmessung der Temperaturabweichung (ΔT) als eine Funktion iterativer Korrekturverschiebungen des Thermostatelements bestimmt wird.

5. Verfahren nach Anspruch 4, wobei die Korrekturdistanz in einer Kompensationstabelle auf der Basis einer zuvor bestimmten Beziehung zwischen ($\Delta$T) und der Korrekturverschiebung gespeichert wird.

6. Verfahren nach Anspruch 5, wobei die Kompensationstabelle im Lauf der Zeit aktualisiert wird.

7. Verfahren nach einem der vorangehenden Ansprüche, wobei im Lauf der Zeit neue Werte für die gewünschte Sekundärmediumtemperatur erhalten werden und wobei jeder aus einer Anzahl von Bereichen gewünschter Sekundärmediumtemperaturen eine individuelle Positionskompensation für das Bewegen des Ventilschließelements um eine individuell definierte Distanz hat.

8. Verfahren nach einem der vorangehenden Ansprüche, wobei die Positionskompensation unabhängig von geänderten Werten für die gewünschte Sekundärmediumtemperatur ist.

9. Verfahren nach einem der vorangehenden Ansprüche, wobei der Schritt des Erhaltens eines gewünschten Temperaturwertes für die Sekundärmediumtemperatur durch Eingeben der gewünschten Temperatur auf einer Benutzerschnittstelle ausgeführt wird.

10. Verfahren nach einem der vorangehenden Ansprüche, wobei das Thermostatventil (2) mit einem Antriebssystem verbunden ist oder ein Antriebssystem umfasst, das eine Antriebssteuereinheit (18) und einen Antriebsmotor (24, 80), der mit dem Thermostatelement (22, 72) wirkverbunden ist, aufweist, wobei der Schritt des Kompensierens der Position des Ventilschließelements ausgeführt wird durch:

   Empfangen der Korrekturdistanz in der Antriebssteuereinheit, Übersetzen der Distanz in eine Bewegung, die durch den Antriebsmotor verlangt wird, und
   Aktivieren des Antriebsmotors, um das Thermostatelement um die Korrekturdistanz in der Richtung zu bewegen.

11. Verfahren nach Anspruch 10, das des Weiteren den Schritt umfasst, das Antriebssystem mittels eines Seebeck-Elements (30), das mit einer ersten Seite in thermischem Kontakt mit dem Sekundärmedium und mit einer zweiten Seite in thermischem Kontakt mit dem Primärmedium steht, mit Energie zu versorgen.

12. Thermostatventilsystem zum Regeln der Wärmeübertragung von einem Wärmetauscher, der ein Primärmedium enthält, wobei das Ventilsystem Folgendes umfasst:

   ein Ventilschließelement (18), das mit einem Ventil dergestalt verbunden ist, dass eine Verschiebungsdistanz des Ventilschließelements (18) den Grad der Öffnung des Ventils bestimmt, und
   ein Thermostatelement (22, 72), das mit dem Ventilschließelement dergestalt verbunden ist, dass eine thermische Ausdehnung oder Schrumpfung eines Abschnitts des Thermostatelements (22, 72) eine Bewegung zu dem Ventilschließelement (18) überträgt,
   ein Mittel zum Erhalten eines gewünschten Wertes für eine gewünschte Sekundärmediumtemperatur,
   ein Mittel zum Erhalten gemessener Werte der Sekundärmediumtemperatur,
   **dadurch gekennzeichnet, dass** es des Weiteren Folgendes umfasst:

   eine Steuereinheit (28), die dafür ausgelegt ist, die gemessenen Werte der Sekundärmediumtemperatur zu erfassen und die Position des Ventilschließelements (18) auf der Basis der früheren Abweichung zwischen dem gewünschten Wert und gemessenen Werten zu kompensieren, um eine künftige Abweichung zu reduzieren.

13. Thermostatventilsystem nach Anspruch 12, das des Weiteren Folgendes umfasst:

   ein Antriebssystem, das mit der Steuereinheit (28) verbunden ist oder die Steuereinheit (28) aufweist und mit einem Antriebsmotor (24, 80) verbunden ist oder einen Antriebsmotor (24, 80) aufweist, der mit dem Thermostatelement (22, 72) wirkverbunden ist und dafür ausgelegt ist, die Position des Thermostatelements (22, 72) und/oder die Distanz zwischen dem Thermostatelement (22, 72) und dem Ventilschließelement (18) zu ändern; wobei die Steuereinheit (18) dafür ausgelegt ist, die Temperaturabweichung in eine Korrekturdistanz in einer Richtung zu übersetzen und den Antriebsmotor (24, 80) zu veranlassen, das Thermostatelement (22, 72), das Ventilschließelement (18) und/oder ein Verbindungselement (170), welches das Ventilschließelement (18) mit dem Thermostatelement (22, 72) verbindet, um die Korrekturdistanz in der Richtung zu bewegen.

**14.** Thermostatventilsystem nach Anspruch 13, wobei der Antriebsmotor (24, 80) ein elektrisch angetriebener Motor ist.

**15.** Thermostatventilsystem nach einem der Ansprüche 13-14, wobei ein Seebeck-Element (30) dafür ausgelegt ist, das Antriebssystem mit Energie zu versorgen, und wobei das Seebeck-Element (30) mit einer ersten Seite in thermischem Kontakt mit dem Sekundärmedium und mit einer zweiten Seite in thermischem Kontakt mit dem Primärmedium steht.

**16.** Thermostatventilsystem nach Anspruch 15, wobei das Seebeck-Element (30) und das Thermostatelement (22, 72) in zwei separaten Abteilen im Inneren eines Gehäuses (34) für das Thermostatventil angeordnet sind, wobei die zwei Abteile thermisch voneinander isoliert sind.

**17.** Thermostatventilsystem nach einem der Ansprüche 12-16, das eine Benutzerschnittstelle zum Eingeben des gewünschten Wertes für die Sekundärmediumtemperatur umfasst, wobei die Benutzerschnittstelle:

an dem Thermostatventil (2) montiert ist oder
in einer räumlich abgesetzten Position in Bezug auf das Thermostatventil angeordnet ist, wie zum Beispiel in Verbindung mit einer Steuervorrichtung eines Gebäudemanagementsystems (GMS) oder einer dedizierten Steuertafel, oder als ein Drahtloskommunikationsgerät, wie zum Beispiel ein Mobiltelefon, ein Computer oder eine Fernbedienung, ausgeführt ist.

**18.** Thermostatventilsystem nach einem der Ansprüche 12-17, wobei sich ein Temperatursensor in oder auf dem Thermostaten oder in der Benutzerschnittstelle befindet.

**Revendications**

**1.** Procédé de régulation d'une soupape thermostatique (2) dans un échangeur de chaleur contenant un fluide primaire afin d'obtenir une température de fluide secondaire souhaitée, dans lequel la soupape thermostatique comprend un élément de fermeture de soupape (18) relié à un élément thermostatique (22, 72) en contact thermique avec un fluide secondaire, la longueur d'une partie de l'élément thermostatique étant fonction de la température de l'élément thermostatique et par conséquent indirectement de la température de fluide secondaire, le procédé comprenant les étapes consistant à :

- obtenir une valeur souhaitée pour la température de fluide secondaire,
- traduire ladite valeur souhaitée en une position correspondante de l'élément thermostatique sur la base de ladite fonction,
- déplacer l'élément thermostatique (22, 72) et l'élément de fermeture de soupape connecté (18) et/ou modifier la distance entre l'élément thermostatique (22, 72) et l'élément de fermeture de soupape connecté (18) sur la base de ladite position correspondante, de telle sorte que la position de l'élément de fermeture de soupape est ajustée et la température de fluide secondaire souhaitée est approchée,
- acquérir des valeurs mesurées de la température de fluide secondaire,
**caractérisé en ce que** le procédé comprend en outre les étapes consistant à :

- compenser la position de l'élément de fermeture de soupape sur la base du dernier écart (ΔT) entre la valeur de température souhaitée et des valeurs de température mesurées afin de réduire l'écart de température futur.

**2.** Procédé selon la revendication 1, dans lequel le dernier écart de température ΔT est calculé selon au moins l'une des formules suivantes :

$$\Delta T = \frac{1}{N}(\Sigma\ Tset - \Sigma\ Tact)$$

ou

$$\Delta T = \frac{1}{N} \Sigma \left( Tset - Tact \right)$$

ou

$$\Delta T = C_{x+1} = \frac{1}{N} \left( Tset - Tact \right) + C_x$$

où $\Delta T$ est le dernier écart de température, $T_{set}$ est la température souhaitée, $T_{act}$ est la température mesurée, N est le nombre des valeurs de mesure acquises qui ont été comparées à au moins une température souhaitée et $C_{x+1}$ est une valeur d'écart récursive.

3. Procédé selon l'une quelconque des revendications précédentes, dans lequel l'étape de compensation de la position de l'élément de fermeture de soupape (18) comprend les étapes consistant à :

traduire l'écart de température en une distance de correction dans une direction, et
déplacer l'élément thermostatique de ladite distance de correction dans ladite direction ou modifier la distance entre l'élément thermostatique (22, 72) et l'élément de fermeture de soupape (18) pour la compensation de la position.

4. Procédé selon la revendication 3, dans lequel la distance de correction est déterminée en mesurant en continu et au fil du temps l'écart de température ($\Delta T$) en fonction de déplacements de correction itératifs de l'élément thermostatique (22, 72).

5. Procédé selon la revendication 4, dans lequel la distance de correction est stockée dans une table de compensation sur la base d'une relation précédemment déterminée entre ($\Delta T$) et le déplacement de correction.

6. Procédé selon la revendication 5, dans lequel la table de compensation est mise à jour au fil du temps.

7. Procédé selon l'une quelconque des revendications précédentes, dans lequel, au fil du temps, de nouvelles valeurs pour la température de fluide secondaire souhaitée peuvent être obtenues, et dans lequel chacune d'un certain nombre de plages de température de fluide secondaire souhaitée a une compensation de position individuelle pour déplacer l'élément de fermeture de soupape d'une distance définie individuellement.

8. Procédé selon l'une quelconque des revendications précédentes, dans lequel la compensation de position est indépendante des valeurs modifiées pour la température de fluide secondaire souhaitée.

9. Procédé selon l'une quelconque des revendications précédentes, dans lequel l'étape d'obtention d'une valeur de température souhaitée pour la température de fluide secondaire est réalisée en entrant la température souhaitée au moyen d'une interface utilisateur.

10. Procédé selon l'une quelconque des revendications précédentes, dans lequel la soupape thermostatique (2) est reliée à ou comprend un système d'entraînement, comprenant une unité de commande d'entraînement (28) et un moteur d'entraînement (24, 80) relié fonctionnellement à l'élément thermostatique (22, 72), dans lequel l'étape de compensation de la position de l'élément de fermeture de soupape est réalisée en :

- recevant ladite distance de correction dans l'unité de commande d'entraînement,
- traduisant ladite distance en un mouvement requis par le moteur d'entraînement, et
- activant le moteur d'entraînement pour déplacer l'élément thermostatique de ladite distance de correction dans ladite direction.

11. Procédé selon la revendication 10, comprenant en outre l'étape de fourniture d'énergie au système d'entraînement au moyen d'un élément de Seebeck (30) placé avec un premier côté en contact thermique avec le fluide secondaire et un second côté en contact thermique avec le fluide primaire.

**12.** Système de soupape thermostatique pour réguler la transmission thermique à partir d'un échangeur de chaleur contenant un fluide primaire, le système de soupape comprenant :

un élément de fermeture de soupape (18) relié à une soupape, de sorte qu'une distance de déplacement de l'élément de fermeture de soupape (18) détermine le degré d'ouverture de ladite soupape, et
un élément thermostatique (22, 72) relié à l'élément de fermeture de soupape, de telle sorte qu'une dilatation/contraction thermique d'une partie de l'élément thermostatique (22, 72) transmet un mouvement à l'élément de fermeture de soupape (18) ;
un moyen pour obtenir une valeur souhaitée pour une température de fluide secondaire souhaitée,
un moyen pour obtenir des valeurs mesurées de la température de fluide secondaire,
**caractérisé en ce qu'**il comprend en outre :

une unité de commande (28) apte à acquérir lesdites valeurs mesurées de la température de fluide secondaire et à compenser la position de l'élément de fermeture de soupape (18) sur la base du dernier écart entre la valeur souhaitée et les valeurs mesurées afin de réduire l'écart futur.

**13.** Système de soupape thermostatique selon la revendication 12, comprenant en outre :

un système d'entraînement, relié à ou comprenant ladite unité de commande (28) et un moteur d'entraînement (24, 80) relié fonctionnellement à l'élément thermostatique (22, 72), et conçu pour modifier la position de l'élément thermostatique (22, 72) et/ou la distance entre l'élément thermostatique (22, 72) et l'élément de fermeture de soupape (18),
dans lequel ladite unité de commande (28) est conçue pour traduire l'écart de température en une distance de correction dans une direction et pour commander le moteur d'entraînement (24, 80) pour déplacer l'élément thermostatique (22, 72), ledit élément de fermeture de soupape (18) et/ou un élément de liaison (170) reliant ledit élément de fermeture de soupape (18) audit élément thermostatique (22, 72) de ladite distance de correction dans ladite direction.

**14.** Système de soupape thermostatique selon la revendication 13, dans lequel le moteur d'entraînement (24, 80) est un moteur à entraînement électrique.

**15.** Système de soupape thermostatique selon l'une quelconque des revendications 13 et 14, dans lequel un élément de Seebeck (30) est conçu pour fournir de l'énergie au système d'entraînement, et dans lequel l'élément de Seebeck (30) est placé avec un premier côté en contact thermique avec le fluide secondaire et un second côté en contact thermique avec le fluide primaire.

**16.** Système de soupape thermostatique selon la revendication 15, dans lequel l'élément de Seebeck (30) et l'élément thermostatique (22, 72) sont placés dans deux compartiments séparés à l'intérieur d'un boîtier (34) pour la soupape thermostatique, les deux compartiments étant isolés thermiquement l'un de l'autre.

**17.** Système de soupape thermostatique selon l'une quelconque des revendications 12 à 16, comprenant une interface utilisateur pour entrer la valeur souhaitée pour la température de fluide secondaire, dans lequel ladite interface utilisateur est :

montée sur la soupape thermostatique (2) ; ou
agencée dans une position éloignée par rapport à la soupape thermostatique, par exemple en liaison avec un dispositif de commande d'un système de gestion d'immeuble (BMS), un panneau de commande dédié, ou agencée en tant que dispositif de communication sans fil, tel qu'un téléphone cellulaire, un ordinateur ou une télécommande.

**18.** Système de soupape thermostatique (2) selon l'une quelconque des revendications 12 à 17, dans lequel un capteur de température est placé dans/sur le thermostat ou dans l'interface utilisateur.

Fig. 1

Fig. 2

*Fig. 3*

*Fig. 4*

Fig. 5a

Fig. 5b

Fig. 6

| T | L | C |
|---|---|---|
| T1 | L1 | C1 |
| T2 | L2 | C2 |
| T3 | L3 | C3 |
| T4 | L4 | C4 |
| . . . | . . . | . . . |

*Fig. 7a*

Fig. 7b

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0923013 A1